# EUROPEAN PATENT APPLICATION

(11) **EP 4 733 566 A2**
(43) Date of publication of application: **29.04.2026**
(21) Application number: 25211130.7
(22) Date of filing: 24.10.2025
(51) Int. Cl.: F02C 6/20, B64D 33/08, F02C 7/14

(54) **THERMAL MANAGEMENT SYSTEM FOR OPEN ROTOR AIRCRAFT PROPULSION SYSTEM**

(30) Priority: 25.10.2024 US 202418927563
(71) Applicant: RTX Corporation, Farmington, CT 06032 (US)
(72) Inventor: CLARK, Thomas E., Wells, 04090 (US); MORTON, Jeffrey T., Manchester, 06040 (US)
(74) Representative: Dehns

(57) **Abstract**

A propulsion system (20) for an aircraft includes an open propulsor rotor (38), a turbine engine (32) and a thermal management system (36). The turbine engine (32) includes an engine core (82) and an engine flowpath (76). The engine core (82) includes a compressor section (71), a combustor section (72) and a turbine section (73). The engine flowpath (76) extends longitudinally though the compressor section (71), the combustor section (72) and the turbine section (73) from an airflow inlet (78) into the engine flowpath (76) to a combustion products exhaust (80) from the engine flowpath (76). The thermal management system (36) is configured to manage heat energy generated by the propulsion system (20) during operation of the turbine engine (32). The thermal management system (36) includes an electric boost compressor (114), a heat exchanger (116) and a system flowpath (110) disposed outside of the engine core (82). The system flowpath (110) extends longitudinally through the electric boost compressor (114) and the heat exchanger (116) from an airflow inlet (122) into the system flowpath (110) to an airflow exhaust (124) from the system flowpath (110).

## Description

### BACKGROUND OF THE DISCLOSURE

### 1. Technical Field

This disclosure relates generally to an aircraft and, more particularly, to a thermal management system for an aircraft propulsion system.

### 2. Background Information

An aircraft propulsion system may include a thermal management system for rejecting heat energy from one or more sub-systems of the aircraft propulsion system. Various types and configurations of thermal management systems are known in the art. While these known thermal management systems have various benefits, there is still room in the art for improvement.

### SUMMARY OF THE DISCLOSURE

According to one aspect of the present invention, there is provided a propulsion system for an aircraft. This propulsion system includes an open propulsor rotor, a turbine engine and a thermal management system. The turbine engine is configured to drive rotation of the open propulsor rotor about an axis. The turbine engine includes an engine core and an engine flowpath. The engine core includes a compressor section, a combustor section and a turbine section. The engine flowpath extends longitudinally though the compressor section, the combustor section and the turbine section from an airflow inlet into the engine flowpath to a combustion products exhaust from the engine flowpath. The thermal management system is configured to manage heat energy generated by the propulsion system during operation of the turbine engine. The thermal management system includes an electric boost compressor, a heat exchanger and a system flowpath disposed outside of the engine core. The system flowpath extends longitudinally through the electric boost compressor and the heat exchanger from an airflow inlet into the system flowpath to an airflow exhaust from the system flowpath.

According to another aspect of the present invention, there is provided another propulsion system for an aircraft. This propulsion system includes a housing structure, an open propulsor rotor, a turbine engine and a thermal management system. The housing structure includes an exterior surface bordering an environment external to the propulsion system. The open propulsor rotor is outside of the housing structure. The turbine engine is housed within the housing structure. The turbine engine is configured to drive rotation of the open propulsor rotor about an axis. The turbine engine includes an engine flowpath, a compressor section, a combustor section and a turbine section. The engine flowpath extends longitudinally though the compressor section, the combustor section and the turbine section from an airflow inlet into the engine flowpath to a combustion products exhaust from the engine flowpath. The thermal management system is housed within the housing structure. The thermal management system is configured to remove heat energy generated during propulsion system operation. The thermal management system includes a system flowpath, a boost compressor and a heat exchanger. The system flowpath extends longitudinally through the boost compressor and the heat exchanger from an airflow inlet into the system flowpath to an airflow exhaust from the system flowpath. The airflow inlet into the system flowpath is located at the exterior surface and fluidly couples the environment external to the propulsion system to the system flowpath.

According to another aspect of the present invention, there is provided another propulsion system for an aircraft. This propulsion system includes a housing structure, an open propulsor rotor, a turbine engine and a thermal management system. The housing structure includes an exterior surface bordering an environment external to the propulsion system. The open propulsor rotor is outside of the housing structure. The turbine engine is housed within the housing structure. The turbine engine is configured to drive rotation of the open propulsor rotor about an axis. The turbine engine includes an engine flowpath, a compressor section, a combustor section and a turbine section. The engine flowpath extends longitudinally though the compressor section, the combustor section and the turbine section from an airflow inlet into the engine flowpath to a combustion products exhaust from the engine flowpath. The thermal management system is housed within the housing structure. The thermal management system is configured to remove heat energy generated during propulsion system operation. The thermal management system includes a system flowpath, a boost compressor and a heat exchanger. The system flowpath extends longitudinally through the boost compressor and the heat exchanger from an airflow inlet into the system flowpath to an airflow exhaust from the system flowpath. The system flowpath is fluidly decoupled from the engine flowpath.

Optionally, and in accordance with any of the above, the system flowpath may be fluidly decoupled from the engine flowpath.

Optionally, and in accordance with any of the above, the airflow inlet into the system flowpath may be fluidly coupled to the engine flowpath upstream of the compressor section.

Optionally, and in accordance with any of the above, the compressor section may include a low pressure compressor section and a high pressure compressor section.

Optionally, and in accordance with any of the above, the propulsion system may also include a housing structure housing the turbine engine and the thermal management system. The housing structure may include an exterior surface bordering an environment external to the propulsion system. The airflow inlet into the system flowpath may be disposed in the exterior surface.

Optionally, and in accordance with any of the above, the propulsion system may include a plurality of open guide vanes arranged circumferentially about the axis. A first of the open guide vanes may project radially out from the housing structure into the environment external to the propulsion system. The airflow inlet into the system flowpath may be disposed axially between the first of the open guide vanes and the airflow exhaust from the system flowpath.

Optionally, and in accordance with any of the above, the airflow exhaust from the system flowpath may be disposed in the exterior surface.

Optionally, and in accordance with any of the above, the propulsion system may also include a control system configured to: power the electric boost compressor when an operational parameter is above a threshold; and depower the electric boost compressor when the operational parameter is below the threshold and the turbine engine is operational.

Optionally, and in accordance with any of the above, the operational parameter may be a temperature of a working fluid within the propulsion system.

Optionally, and in accordance with any of the above, the operational parameter may be a temperature of ambient air in an environment external to the propulsion system.

Optionally, and in accordance with any of the above, the operational parameter may be a throttle setting for the propulsion system.

Optionally, and in accordance with any of the above, the system flowpath may include a plurality of parallel legs upstream of the heat exchanger. A first of the parallel legs may extend longitudinally through the electric boost compressor. A second of the parallel legs may bypass the electric boost compressor.

Optionally, and in accordance with any of the above, the system flowpath may also include an inlet leg extending longitudinally from the airflow inlet into the system flowpath towards the plurality of parallel legs. The thermal management system may also include a flow diverter configured to: fluidly couple the inlet leg to the first of the parallel legs during a first mode; and fluidly couple the inlet leg to the second of the parallel legs during a second mode.

Optionally, and in accordance with any of the above, the flow diverter may also be configured to fluidly decouple the inlet leg from the second of the parallel legs during the first mode.

Optionally, and in accordance with any of the above, the flow diverter may also be configured to fluidly decouple the inlet leg from the first of the parallel legs during the second mode.

Optionally, and in accordance with any of the above, the propulsion system may also include a working fluid circuit extending through the heat exchanger and thermally coupled to a heat source within the turbine engine.

Optionally, and in accordance with any of the above, the propulsion system may also include a working fluid circuit extending through the heat exchanger. The working fluid circuit may be configured to flow a liquid working fluid.

Optionally, and in accordance with any of the above, the heat exchanger may be a first heat exchanger. The thermal management system may also include a second heat exchanger and a working fluid circuit extending through the first heat exchanger and the second heat exchanger.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic sectional illustration of an aircraft propulsion system.
FIG. 2 is a partial schematic sectional illustration of the aircraft propulsion system at a propulsion section.
FIG. 3 is a partial schematic sectional illustration of the aircraft propulsion system at a thermal management system during a free-flow mode.
FIG. 4 is a partial schematic sectional illustration of the aircraft propulsion system at the thermal management system during a boost mode.
FIG. 5 is a partial schematic illustration of a heat exchanger for the thermal management system coupled to a working fluid circuit.
FIGS. 6 and 7 are partial schematic sectional illustrations of the aircraft propulsion system with various alternative inlet locations for the thermal management system.
FIG. 8 is a partial schematic sectional illustration of the aircraft propulsion system with an alternative thermal management system.

### DETAILED DESCRIPTION

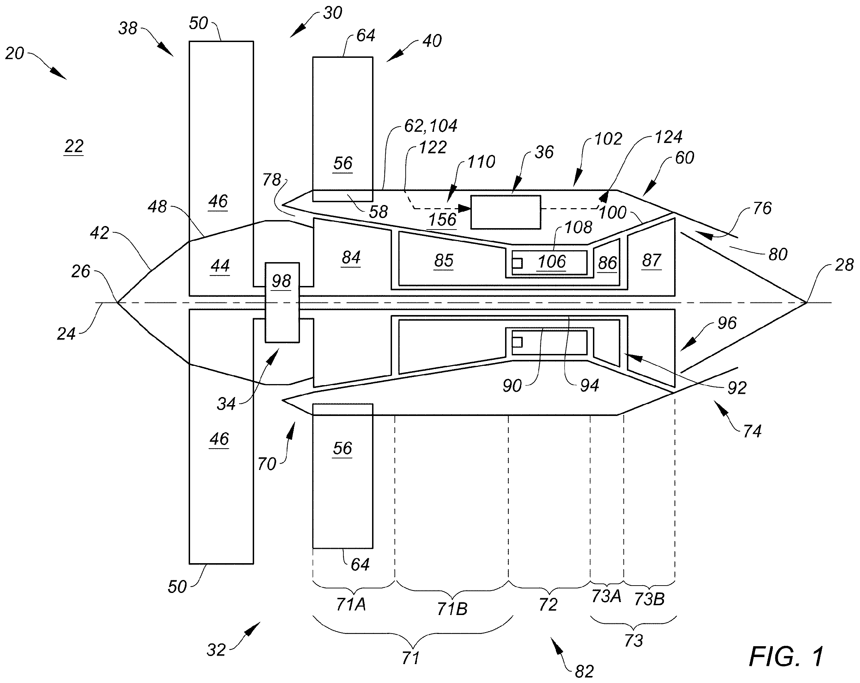

FIG. 1 is a side schematic illustration of a propulsion system 20 for an aircraft. The aircraft may be an airplane, a drone (e.g., an unmanned aerial vehicle (UAV)) or any other manned or unmanned aerial vehicle or system. The aircraft propulsion system 20 of FIG. 1 is configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30, a gas turbine engine 32, a drivetrain 34 and a thermal management system 36.

The propulsion section 30 of FIG. 1 includes an open propulsor rotor 38 and an open guide vane structure 40. These propulsion section members 38 and 40 are un-ducted and unshrouded components of the aircraft propulsion system 20 and its propulsion section 30. The propulsion section 30 of FIG. 1 also includes a nose cone 42 disposed at (e.g., on, adjacent or proximate) the propulsion system forward end 26. Briefly, this nose cone 42 may be configured as a spinner which is rotatable with the propulsor rotor 38 about the propulsion system axis 24. Alternatively, the nose cone 42 may be configured as a stationary structure of the propulsion section 30.

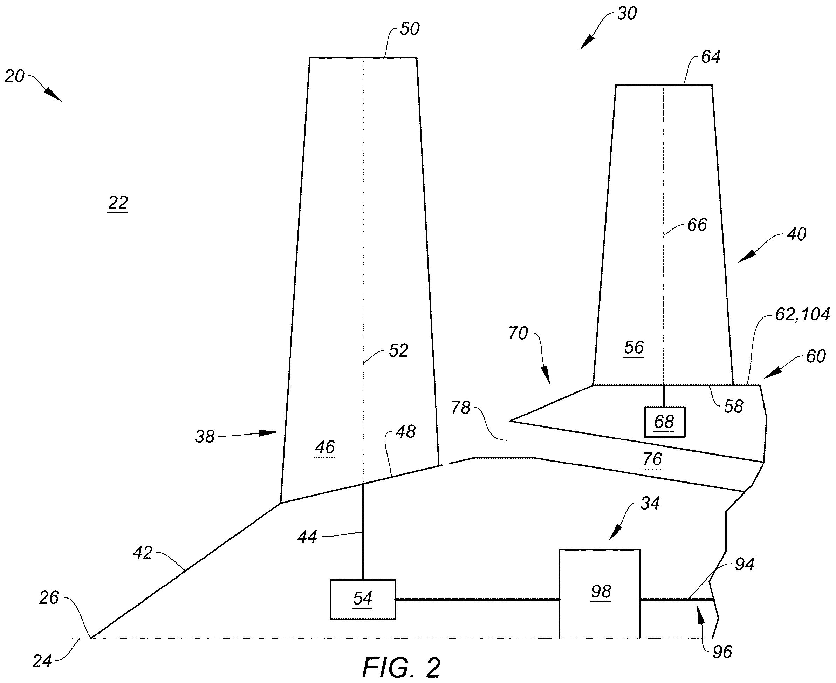

Referring to FIG. 2, the propulsor rotor 38 includes a rotor base 44 (e.g., a disk or a hub) and a plurality of open propulsor blades 46 (e.g., airfoils). The propulsor blades 46 are arranged and may be equispaced circumferentially about the rotor base 44 and the propulsion system axis 24 in an array; e.g., a circular array. Each of the propulsor blades 46 is connected to (e.g., formed integral with or otherwise attached to) the rotor base 44. Each of the propulsor blades 46 projects spanwise along a span line of the respective propulsor blade 46 (e.g., radially relative to the propulsion system axis 24) out from an exterior surface 48 of the rotor base 44, into the external environment 22, to an unshrouded distal tip 50 of the respective propulsor blade 46. Each propulsor blade 46 is thereby configured as an un-ducted and unshrouded propulsor blade which is exposed to (e.g., disposed in) the surrounding external environment 22.

Each propulsor blade 46 may be configured to pivot about a respective blade pivot axis 52. This blade pivot axis 52 extends radially relative to the propulsion system axis 24. The blade pivot axis 52 of FIG. 2, for example, is arranged perpendicular to the propulsion system axis 24 when viewed, for example, in a longitudinal reference plane parallel to (e.g., including) the propulsion system axis 24; e.g., the plane of FIG. 2. Each propulsor blade 46 of FIG. 2 is operatively coupled with a blade actuation system 54. This blade actuation system 54 is configured to pivot each propulsor blade 46 about its own respective blade pivot axis 52. By pivoting each propulsor blade 46 about its blade pivot axis 52, a pitch of the respective propulsor blade 46 may be changed. Note, while the blade pivot axis 52 is shown in FIG. 2 as being perpendicular to the propulsion system axis 24, it is contemplated this blade pivot axis 52 may or may not be coincident with the propulsion system axis 24. Moreover, it is contemplated each blade pivot axis 52 may alternatively be angularly offset from the propulsion system axis 24 by an acute angle or an obtuse angle when viewed, for example, in the longitudinal reference plane. Of course, it is contemplated some or all of the propulsor blades 46 may be alternatively moved to change the propulsor blade pitch. Moreover, it is contemplated some or all of the propulsor blades 46 may alternatively be fixed pitch propulsor blades in other embodiments.

The guide vane structure 40 of FIG. 2 includes a plurality of open exit guide vanes 56 (e.g., airfoils) that are arranged and may be equispaced circumferentially about the propulsion system axis 24 in an array; e.g., a circular array. This guide vane structure 40 and its guide vanes 56 are arranged axially next to (e.g., adjacent) the propulsor rotor 38 and its propulsor blades 46. The guide vane structure 40 and its guide vanes 56 of FIG. 2, for example, are arranged downstream of the propulsor rotor 38 and its propulsor blades 46, without (e.g., any) other elements axially therebetween to obstruct, turn and/or otherwise influence the air propelled by the propulsor rotor 38 to the guide vane structure 40 for example. Each of the guide vanes 56 of FIG. 2 is coupled to a support structure 58 of a stationary housing structure 60 for the aircraft propulsion system 20. This support structure 58 may be configured as or otherwise include a support frame, a case and/or another fixed structure of the housing structure 60. Each of the guide vanes 56 projects spanwise along a span line of the respective guide vane 56 (e.g., radially relative to the propulsion system axis 24) out from an exterior surface 62 of the housing structure 60, into the external environment 22, to an unshrouded, distal tip 64 of the respective guide vane 56. Here, the exterior surface 62 radially borders the external environment 22 and forms an exterior aerodynamic flow surface of the aircraft propulsion system 20. Each guide vane 56 is thereby configured as an un-ducted and unshrouded guide vane which is exposed to (e.g., disposed in) the surrounding external environment 22.

Each guide vane 56 may be configured to pivot about a respective vane pivot axis 66. This vane pivot axis 66 extends radially relative to the propulsion system axis 24. The vane pivot axis 66 of FIG. 2, for example, is arranged perpendicular to the propulsion system axis 24 when viewed, for example, in the longitudinal reference plane. Each guide vane 56 of FIG. 2 is operatively coupled with a vane actuation system 68, which vane actuation system 68 may be discrete from or integrated as part of the blade actuation system 54. The vane actuation system 68 is configured to pivot each guide vane 56 about its own respective vane pivot axis 66. By pivoting each guide vane 56 about its vane pivot axis 66, a pitch of the respective guide vane 56 may be changed. Note, while the vane pivot axis 66 is shown in FIG. 2 as being perpendicular to the propulsion system axis 24, it is contemplated this vane pivot axis 66 may or may not be coincident with the propulsion system axis 24. Moreover, it is contemplated each vane pivot axis 66 may alternatively be angularly offset from the propulsion system axis 24 by an acute angle or an obtuse angle when viewed, for example, in the longitudinal reference plane. Of course, it is contemplated some or all of the guide vanes 56 may be alternatively moved to change the guide vane pitch. Moreover, it is contemplated some or all of the guide vanes 56 may alternatively be fixed pitch guide vanes in other embodiments.

Referring to FIG. 1, the turbine engine 32 includes an inlet section 70, a compressor section 71, a combustor section 72, a turbine section 73 and an exhaust section 74. The compressor section 71 of FIG. 1 includes a low pressure compressor (LPC) section 71A and a high pressure compressor (HPC) section 71B. The turbine section 73 of FIG. 1 includes a high pressure turbine (HPT) section 73A and a low pressure turbine (LPT) section 73B. The turbine engine 32 also includes an (e.g., annular) engine flowpath 76 which extends longitudinally through the aircraft propulsion system 20 of FIG. 1 and its turbine engine 32 from an (e.g., annular) airflow inlet 78 into the engine flowpath 76 to a (e.g., annular) combustion products exhaust 80 from the engine flowpath 76. The engine flowpath inlet 78 is also an airflow inlet into the aircraft propulsion system 20 of FIG. 1 and its turbine engine 32. The engine flowpath exhaust 80 is also a combustion products exhaust from the aircraft propulsion system 20 of FIG. 1 and its turbine engine 32. At least (or only) the LPC section 71A, the HPC section 71B, the combustor section 72, the HPT section 73A and the LPT section 73B collectively form a core 82 (e.g., a gas generator) of the turbine engine 32.

Each of the engine sections 71A, 71B, 73A and 73B includes a respective bladed rotor 84-87; e.g., a ducted and/or shrouded engine rotor. Each of these engine rotors 84-87 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 76. Each of the rotor blades is connected to the respective rotor base. Each of the rotor blades projects radially (e.g., spanwise) out from the respective rotor base into the engine flowpath 76 and to a distal tip of the respective rotor blade.

The HPC rotor 85 is coupled to and rotatable with the HPT rotor 86. The HPC rotor 85 of FIG. 1, for example, is connected to the HPT rotor 86 by a high speed shaft 90. At least (or only) the HPC rotor 85, the HPT rotor 86 and the high speed shaft 90 collectively form a high speed rotating assembly 92; e.g., a high speed spool of the engine core 82. This high speed rotating assembly 92 of FIG. 1 and its members 85, 86 and 90 are rotatable about the propulsion system axis 24. However, in other embodiments, the high speed rotating assembly 92 and its members 85, 86 and 90 may alternatively be rotatable about another rotational axis which is (e.g., laterally and/or angularly) offset from the rotational axis of the propulsor rotor 38.

The LPC rotor 84 is coupled to and rotatable with the LPT rotor 87. The LPC rotor 84 of FIG. 1, for example, is connected to the LPT rotor 87 by a low speed shaft 94. At least (or only) the LPC rotor 84, the LPT rotor 87 and the low speed shaft 94 collectively form a low speed rotating assembly 96; e.g., a low speed spool of the engine core 82. This low speed rotating assembly 96 of FIG. 1 and its members 84, 87 and 94 are rotatable about the propulsion system axis 24. However, in other embodiments, the low speed rotating assembly 96 and its members 84, 87 and 94 may alternatively be rotatable about another rotational axis which is (e.g., laterally and/or angularly) offset from the rotational axis of the propulsor rotor 38.

The low speed rotating assembly 96 is coupled to the propulsor rotor 38 through the drivetrain 34. This drivetrain 34 may be configured as a geared drivetrain, where a geartrain 98 (e.g., a transmission, a speed change device, an epicyclic geartrain, etc.) is disposed between and operatively couples the propulsor rotor 38 to the low speed rotating assembly 96 and its LPT rotor 87. With this arrangement, the propulsor rotor 38 may rotate at a different (e.g., slower) rotational speed than the low speed rotating assembly 96 and its LPT rotor 87. Here, the propulsor rotor 38 and the low speed rotating assembly 96 may rotate in a common (the same) direction about the propulsion system axis 24 or in opposite directions about the propulsion system axis 24 depending, for example, upon the specific configuration of the geartrain 98. Alternatively, the drivetrain 34 may be configured as a direct drive drivetrain, where the geartrain 98 is omitted. With such an arrangement, the propulsor rotor 38 rotates at a common (the same) rotational speed as the low speed rotating assembly 96 and its LPT rotor 87.

The engine sections 70-74 may be arranged sequentially along the propulsion system axis 24 and are housed within and/or formed by the housing structure 60. This housing structure 60 includes an engine case 100 (e.g., a gas generator case) and a nacelle 102. The engine case 100 houses one or more of the engine sections 71A-73B; e.g., the engine core 82. The engine case 100 of FIG. 1, for example, extends axially along (e.g., axially overlaps) and extends circumferentially about (e.g., circumscribes) the engine sections 71A-73B and their respective bladed rotors 84-87. The engine case 100 may also house the geartrain 98. The nacelle 102 houses and provides an aerodynamic cover over the engine case 100. An exterior wall 104 of the nacelle 102 of FIG. 1, for example, is disposed radially outboard of, extends axially along (e.g., axially overlaps) and extends circumferentially about (e.g., circumscribes) the engine core 82 and its engine case 100. This nacelle wall 104 may at least partially or completely form the exterior surface 62. With the foregoing arrangement, the bladed rotors 84-87 are disposed within the housing structure 60. By contrast, the propulsor rotor 38 and the guide vane structure 40 are disposed at least partially (or completely) outside of the housing structure 60.

During operation of the aircraft propulsion system 20 of FIG. 1, ambient air within the external environment 22 is propelled by the rotating propulsor rotor 38 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 38 flows axially across the guide vane structure 40 and outside of the housing structure 60 and its exterior surface 62; e.g., along an exterior of the nacelle 102. The guide vane structure 40 conditions (e.g., straightens out, de-swirls, etc.) the outer stream of air within the external environment 22 to enhance the forward thrust. By contrast, an inner stream of the air propelled by the rotating propulsor rotor 38 may bypass the guide vane structure 40 and enter the turbine engine 32 and its engine flowpath 76 through the engine flowpath inlet 78. The air entering the engine flowpath 76 through the engine flowpath inlet 78 may be referred to as "core air".

The core air is compressed by the LPC rotor 84 and the HPC rotor 85 and directed into a combustion chamber 106 (e.g., an annular combustion chamber) of a combustor 108 (e.g., an annular combustor) in the combustor section 72. Fuel is injected into the combustion chamber 106 by one or more fuel injectors and mixed with the compressed core air to provide a fuel-air mixture. This fuel-air mixture is ignited and combustion products thereof flow through and sequentially drive rotation of the HPT rotor 86 and the LPT rotor 87. The rotation of the HPT rotor 86 and the LPT rotor 87 respectively drive rotation of the HPC rotor 85 and the LPC rotor 84 and, thus, compression of the core air. The rotation of the LPT rotor 87 also drives the rotation of the propulsor rotor 38 through the drivetrain 34. The turbine engine 32 and its low speed rotating assembly 96 thereby power operation of (e.g., drive rotation of) the propulsor rotor 38 during aircraft propulsion system operation.

The engine flowpath 76 of FIG. 1 extends longitudinally from the engine flowpath inlet 78, sequentially through the inlet section 70, the LPC section 71A, the HPC section 71B, the combustor section 72, the HPT section 73A, the LPT section 73B and the exhaust section 74, to the engine flowpath exhaust 80. The engine flowpath 76 of FIG. 1 is configured such that the core air and the combustion products generally flow in the aft, downstream direction towards the propulsion system aft end 28. The core air and the combustion products thereby flow along with the ambient air propelled by the rotating propulsor rotor 38 in a common axial direction - the downstream, aft direction. The turbine engine 32 of the present disclosure, however, is not limited to such an exemplary common flow engine arrangement. For example, the engine flowpath 76 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 38. Here, the turbine engine 32 may have a reverse flow engine arrangement.

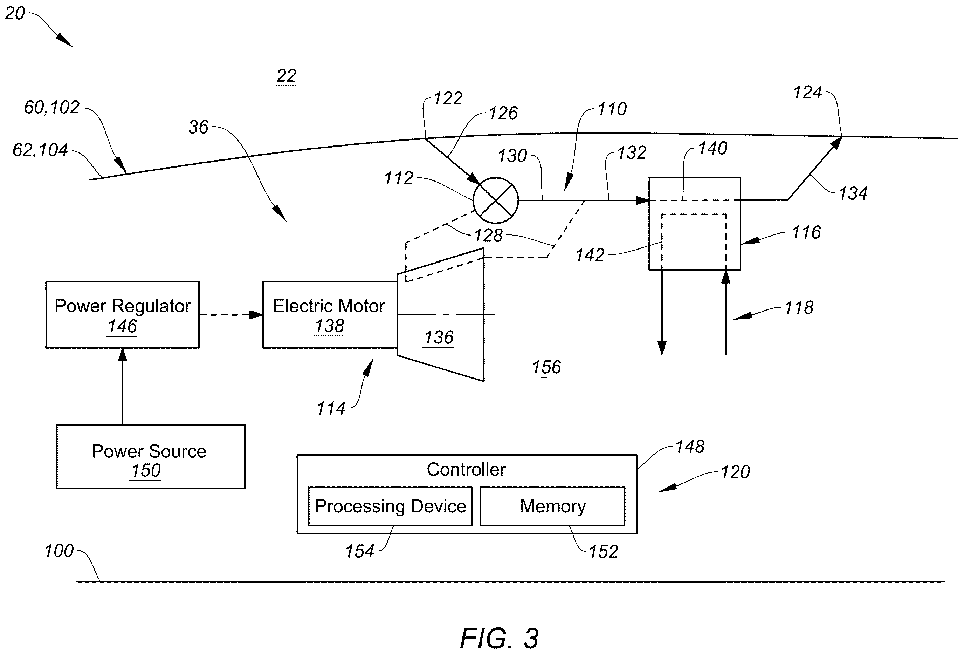

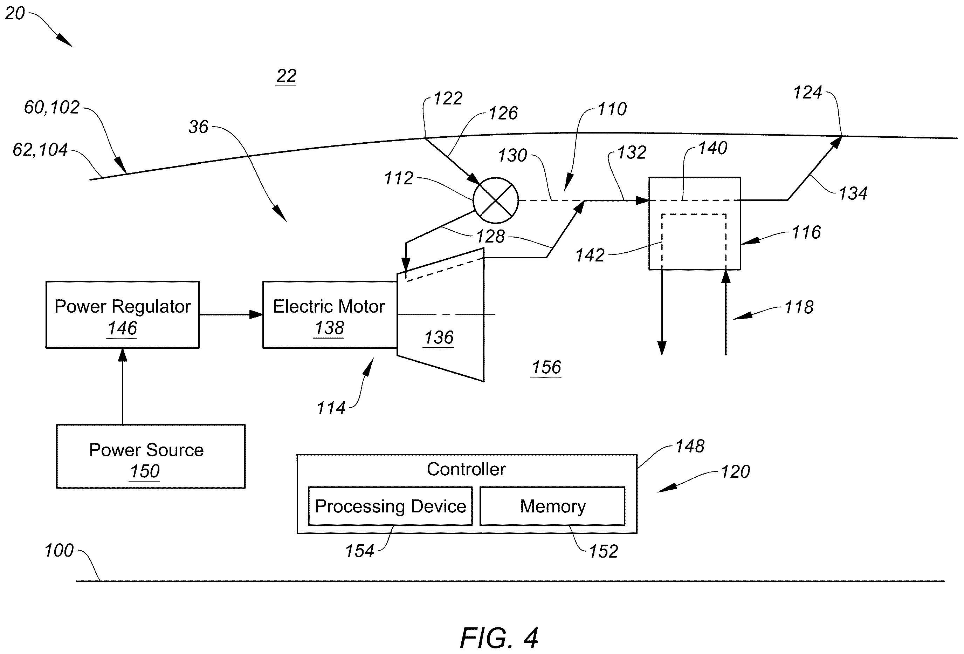

During propulsion system operation, various sub-systems and components within the aircraft propulsion system 20 generate and/or are subject to heat energy. Examples of the sub-systems include, but are not limited to: (a) a lubrication system for the aircraft propulsion system 20; (b) a cooling system for the aircraft propulsion system 20; (c) a fuel system for the aircraft propulsion system 20; (d) an electrical system for the aircraft propulsion system 20; (e) an actuation system for the aircraft propulsion system 20; and the like. Examples of the components include, but are not limited to: the geartrain 98; bearing(s); engine heat exchanger(s); flowpath wall(s); rotor blade(s); stator vane(s); a combustor; electric machine(s) (e.g., electric motor(s), electric generator(s), electric motor-generator(s)); electrical circuitry; and various other heat sources. Referring to FIGS. 3 and 4, the thermal management system 36 is configured to dissipate and/or otherwise remove at least some of the heat energy from the subsystem(s) and/or the component(s) within the aircraft propulsion system 20. The thermal management system 36 of FIGS. 3 and 4, for example, includes a system flowpath 110 (e.g., a cooling air flowpath), a flow diverter 112 (e.g., a switching valve or valve system), a boost compressor 114, a heat exchanger 116 and a working fluid circuit 118 which flows a working fluid. For ease of description, the working fluid is described below as a liquid such as, but not limited to, liquid lubricant (e.g., oil), liquid coolant, liquid hydraulic fluid, liquid fuel and/or the like. However, it is contemplated the working fluid may alternatively be (or include) a gas where, for example, the working fluid is core air bleed from the engine flowpath 76, gaseous fuel, etc. The thermal management system 36 of FIGS. 3 and 4 also includes a control system 120.

The system flowpath 110 of FIGS. 3 and 4 extends longitudinally within the aircraft propulsion system 20 from an airflow inlet 122 into the system flowpath 110 to an airflow exhaust 124 from the system flowpath 110. More particularly, the system flowpath 110 sequentially extends longitudinally through the flow diverter 112, (e.g., optionally) through the boost compressor 114 and through the heat exchanger 116, from the system flowpath inlet 122 to the system flowpath exhaust 124. The system flowpath 110 of FIGS. 3 and 4, for example, includes an inlet leg 126, a compressor leg 128, a bypass leg 130, a heat exchange leg 132 and an exhaust leg 134. The inlet leg 126 projects longitudinally from the system flowpath inlet 122 towards inlets into the flowpath legs 128 and 130. The compressor leg 128 and the bypass leg 130 are arranged fluidly in parallel between the inlet leg 126 and the heat exchange leg 132. The compressor leg 128 extends longitudinally through the boost compressor 114, and the compressor leg 128 fluidly couples the inlet leg 126 (through the flow diverter 112) to the heat exchange leg 132. The bypass leg 130 is disposed outside of and bypasses the boost compressor 114, and the bypass leg 130 fluidly couples the inlet leg 126 (through the flow diverter 112) to the heat exchange leg 132. The heat exchange leg 132 extends longitudinally through the heat exchanger 116, and the heat exchange leg 132 fluidly couples the flowpath legs 128 and 130 to the exhaust leg 134. The exhaust leg 134 projects longitudinally to the system flowpath exhaust 124, and the exhaust leg 134 fluidly couples the heat exchange leg 132 to the system flowpath exhaust 124.

The flow diverter 112 of FIGS. 3 and 4 is configured to selectively fluidly couple the inlet leg 126 and, thus, the system flowpath inlet 122 to the compressor leg 128 and/or the bypass leg 130. The flow diverter 112, for example, may be configured as or otherwise include a switching valve or valve system. Referring to FIG. 3, during a free-flow mode (e.g., zero-boost mode, a passive mode) of operation, the flow diverter 112 may fluidly couple the inlet leg 126 to the bypass leg 130. Here, the flow diverter 112 may also fluidly decouple the inlet leg 126 from the compressor leg 128. Referring to FIG. 4, during a boost mode of operation, the flow diverter 112 may fluidly couple the inlet leg 126 to the compressor leg 128. Here, the flow diverter 112 may also fluidly decouple the inlet leg 126 from the bypass leg 130. Of course, it is also contemplated the flow diverter 112 may operate in a partial boost mode where the flow diverter 112 fluidly couples the inlet leg 126 to both the compressor leg 128 and the bypass leg 130.

The boost compressor 114 of FIG. 4 is configured to boost (e.g., increase) a pressure and/or a flow rate of air flowing through the system flowpath 110 and its compressor leg 128. The boost compressor 114 of FIG. 4, for example, includes a compressor rotor 136 with blades (e.g., airfoils, vanes, etc.) disposed within the system flowpath 110 and its compressor leg 128. The boost compressor 114 of FIG. 4 also includes an electric motor 138 operably coupled to the compressor rotor 136. The electric motor 138 is configured to drive rotation of the compressor rotor 136 about a rotational axis of the boost compressor 114, where the rotation of the compressor rotor 136 compresses the air within the system flowpath 110 and its compressor leg 128. With this arrangement, the boost compressor 114 is configured as an electric boost compressor. Using the electric motor 138 to drive the rotation of the compressor rotor 136 may be advantageous in order to divorce operation of the boost compressor 114 from other mechanical and/or fluid systems of the aircraft propulsion system 20. However, in other embodiments, it is contemplated the compressor rotor 136 may alternatively (or also) be rotationally driven by another drive unit.

The heat exchanger 116 of FIGS. 3 and 4 includes a plurality of fluidly discrete internal passages 140 and 142. The air passage 140 of FIGS. 3 and 4 is part of and is thereby fluidly coupled inline with the system flowpath 110 and its heat exchange leg 132. The working fluid passage 142 of FIGS. 3 and 4 is part of and is thereby fluidly coupled inline with the working fluid circuit 118. These internal passages 140 and 142 may be arranged to provide the heat exchanger 116 with a parallel flow configuration, a cross-flow configuration, a counterflow configuration, or a hybrid configuration including any two or more of the foregoing configurations. With this arrangement, the heat exchanger 116 is configured to exchange heat energy between (a) the working fluid flowing through the working fluid circuit 118 and its working fluid passage 142 and (b) the air flowing through the system flowpath 110 and its heat exchange leg 132. Note, while the heat exchanger 116 is shown in FIGS. 3 and 4 with a single air passage 140 and a single working fluid passage 142 for ease of illustration, it is to be understood the heat exchanger 116 may include a network of the air passages and/or a network of the working fluid passages.

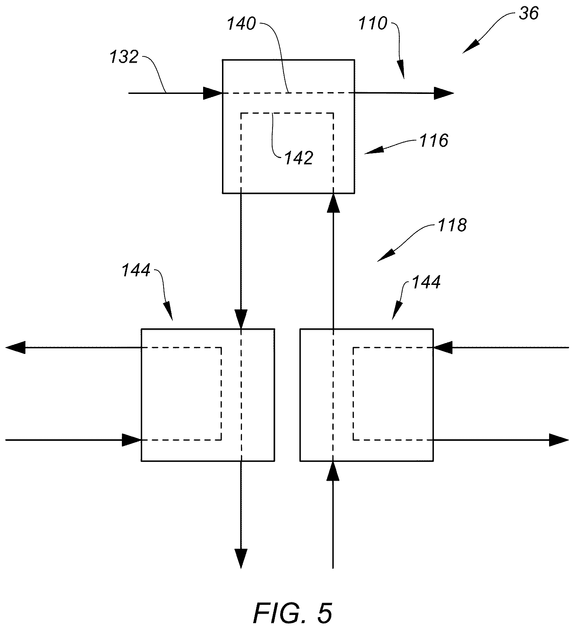

The working fluid circuit 118 may be configured as part of another fluid system for the aircraft propulsion system 20 such as, but not limited to, a lubrication system, a coolant system, a fuel system, a bleed air system, or the like. With such a configuration, the working fluid circuit 118 and/or its working fluid may receive heat energy (e.g., directly) from the sub-systems and/or the components within the aircraft propulsion system 20 to be cooled and/or otherwise thermally managed. Alternatively, referring to FIG. 5, the working fluid circuit 118 may be configured as part of an intermediate thermal bus. The working fluid circuit 118, for example, may also extend through one or more other heat exchangers 144 for the sub-system(s) and/or the component(s) within the aircraft propulsion system 20 to be cooled and/or otherwise thermally managed.

Referring to FIGS. 3 and 4, the control system 120 is configured to control operation of the thermal management system 36. The control system 120 of FIGS. 3 and 4, for example, includes an electrical power regulator 146 and a controller 148. The power regulator 146 is electrically coupled between an electrical power source 150 and the electric motor 138. This power regulator 146 may be configured as or otherwise include a switch (e.g., a contactor) and/or another current regulating device operable to selectively direct and/or regulate an electrical current from the power source 150 to the electric motor 138. Examples of the power source 150 include, but are not limited to, a battery system, an electric generator driven by the turbine engine 32, and the like.

The controller 148 of FIGS. 3 and 4 is in signal communication with (e.g., hardwired and/or wirelessly coupled to) the flow diverter 112 and the power regulator 146. The controller 148 may be implemented with a combination of hardware and software. The hardware may include memory 152 and at least one processing device 154, which processing device 154 may include one or more single-core and/or multi-core processors. The hardware may also or alternatively include analog and/or digital circuitry other than that described above.

The memory 152 is configured to store software (e.g., program instructions) for execution by the processing device 154, which software execution may control and/or facilitate performance of one or more operations such as those described herein. The memory 152 may be a non-transitory computer readable medium. For example, the memory 152 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

The thermal management system 36 may operate in various modes of operation including, for example, the free-flow mode and the boost mode. The selection of the mode of operation may be based on an operational parameter (or multiple operational parameters). Examples of the operational parameter(s) include, but are not limited to, a temperature of the working fluid, a temperature of the air within the external environment 22, or a throttle setting for the aircraft propulsion system 20. The operational parameter(s) may be measured, derived from an onboard model, relayed from a control program and/or otherwise obtained.

Referring to FIG. 3, the thermal management system 36 may operate in the free-flow mode of operation when, for example, the controller 148 determines the operational parameter is equal to or below a threshold. Briefly, the threshold may be retrieved from a lookup table, or derived from a model or using an algorithm. During the free-flow mode of FIG. 3, the controller 148 signals the flow diverter 112 to fluidly couple the inlet leg 126 to the bypass leg 130 while also fluidly decoupling the inlet leg 126 from the compressor leg 128. The controller 148 may also signal the power regulator 146 to electrically decouple the power source 150 from the electric motor 138 to cutoff electrical power to the electric motor 138. The electric motor 138 and, thus, the boost compressor 114 may thereby be de-energized and non-operational during the free-flow mode. With this arrangement, the system flowpath 110 is operable to direct a free flow of air (e.g., bled from the external environment 22 through the system flowpath inlet 122) through the heat exchanger 116 before being exhausted back into the external environment 22. As the air flows through the heat exchanger 116, heat energy from the working fluid flowing through the working fluid circuit 118 is transferred into the air. This heat energy exchange cools the working fluid for further use within the aircraft propulsion system 20. The free-flow mode may also or alternatively be used during certain operating regimes; e.g., aircraft takeoff, aircraft climb and/or aircraft cruise.

Referring to FIG. 4, the thermal management system 36 may operate in the boost mode of operation when, for example, the controller 148 determines the operational parameter is greater than the threshold. During the boost mode of FIG. 4, the controller 148 signals the flow diverter 112 to fluidly couple the inlet leg 126 to the compressor leg 128 while also fluidly decoupling the inlet leg 126 from the bypass leg 130. The controller 148 may also signal the power regulator 146 to electrically couple the power source 150 to the electric motor 138 to provide electrical power to the electric motor 138. The electric motor 138 and, thus, the boost compressor 114 may thereby be energized and operational during the boost mode. With this arrangement, the system flowpath 110 is operable to direct a free flow of air (e.g., bled from the external environment 22 through the system flowpath inlet 122) into the boost compressor 114. The boost compressor 114 compresses the air and directs the air at a higher pressure and/or at a higher flow rate through the heat exchanger 116 before being exhausted back into the external environment 22. As the air flows through the heat exchanger 116, heat energy from the working fluid flowing through the working fluid circuit 118 is transferred into the air. This heat energy exchange cools the working fluid for further use within the aircraft propulsion system 20. The boost mode may also or alternatively be used during certain operating regimes; e.g., aircraft ground idle (e.g., while stationary or taxiing on a runway), aircraft descent and/or aircraft flight idle.

While operation of the thermal management system 36 is described above with respect to the free-flow mode and the boost mode, it is contemplated the thermal management system 36 may (or may not) also be operated in an intermediate mode; e.g., one or more partial boost modes. During these partial boost modes, the flow diverter 112 may be controlled to direct air from the inlet leg 126 into both the compressor leg 128 and the bypass leg 130. In addition or alternatively, the electric motor 138 may be controlled to rotate the compressor rotor 136 at an intermediate speed in order to provide a moderate boost to the air within the system flowpath 110.

In some embodiments, referring to FIGS. 3 and 4, one or more members (e.g., 110, 112, 114 and/or 116) of the thermal management system 36 may be located outside of the engine core 82 (see FIG. 1) and its engine case 100. The system members 110, 112, 114 and/or 116, for example, may be disposed in a compartment 156 formed by and radially between the engine case 100 and the nacelle wall 104. In other embodiments, however, one or more members (e.g., 110, 112, 114 and/or 116) of the thermal management system 36 may alternatively be arranged within a compartment of a pylon structure mounting the aircraft propulsion system 20 to an airframe of the aircraft.

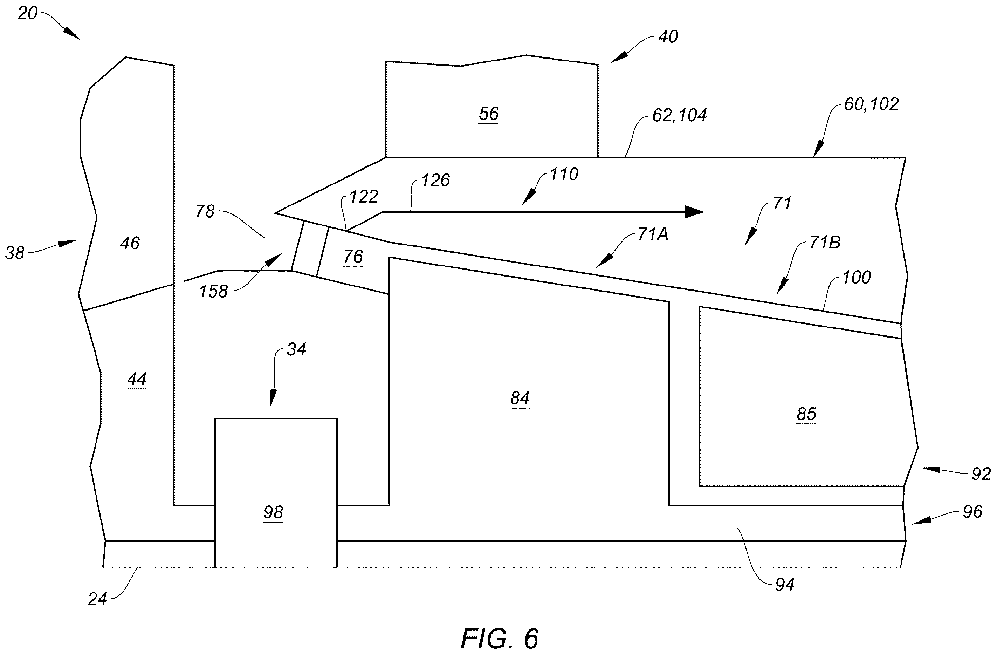

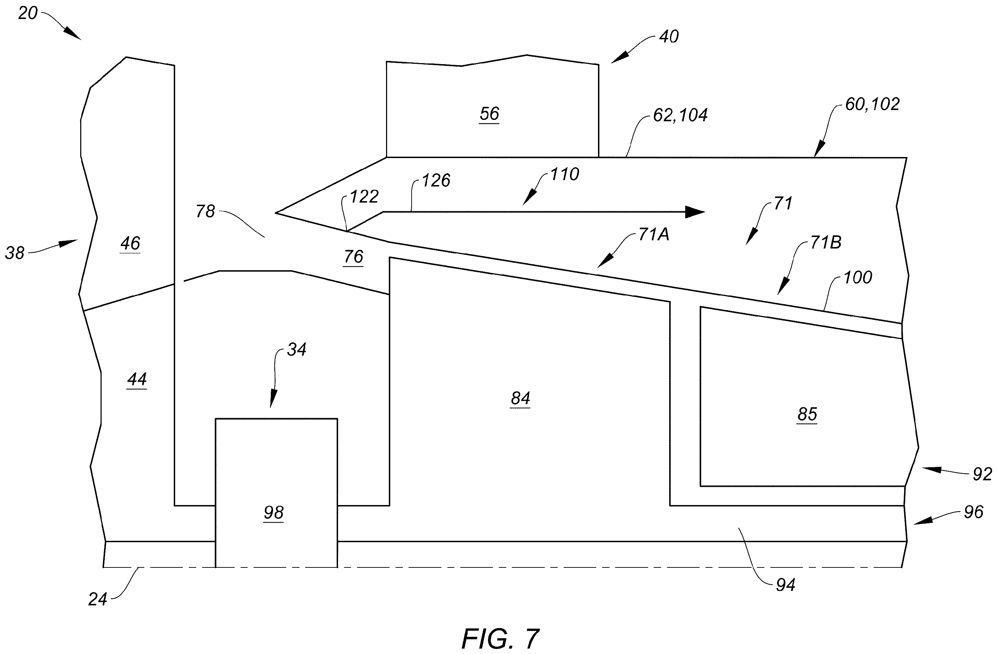

In some embodiments, referring to FIG. 1, the system flowpath 110 may be fluidly discrete of and decoupled from the engine flowpath 76. The system flowpath inlet 122 and the system flowpath exhaust 124 of FIG. 1, for example, are disposed in the exterior surface 62. The system flowpath inlet 122 is thereby (e.g., directly) fluidly coupled to the external environment 22, independent of the engine flowpath 76. Similarly, the system flowpath exhaust 124 is (e.g., directly) fluidly coupled to the external environment 22, independent of the engine flowpath 76. Here, both the system flowpath inlet 122 and the system flowpath exhaust 124 are arranged downstream of the guide vane structure 40 and its guide vanes 56. More particularly, the system flowpath inlet 122 is located axially along the propulsion system axis 24 between (a) the guide vane structure 40 and its guide vanes 56 and (b) the system flowpath exhaust 124 / the propulsion system aft end 28. The present disclosure, however, is not limited to such an exemplary arrangement. For example, referring to FIGS. 6 and 7, the system flowpath inlet 122 may alternatively be fluidly coupled to the external environment 22 through a portion of the engine flowpath 76 upstream of the engine core 82 (see FIG. 1) and its compressor section 71. In some embodiments, referring to FIG. 6, the system flowpath inlet 122 may be disposed at a location along the engine flowpath 76 downstream of an inlet vane structure 158 for the engine flowpath 76. In other embodiments, referring to FIG. 7, the engine flowpath 76 may be configured without a vane structure upstream of the system flowpath inlet 122. With such an arrangement, the system flowpath 110 may receive relatively high velocity air from the engine flowpath 76, but at a reduced pressure.

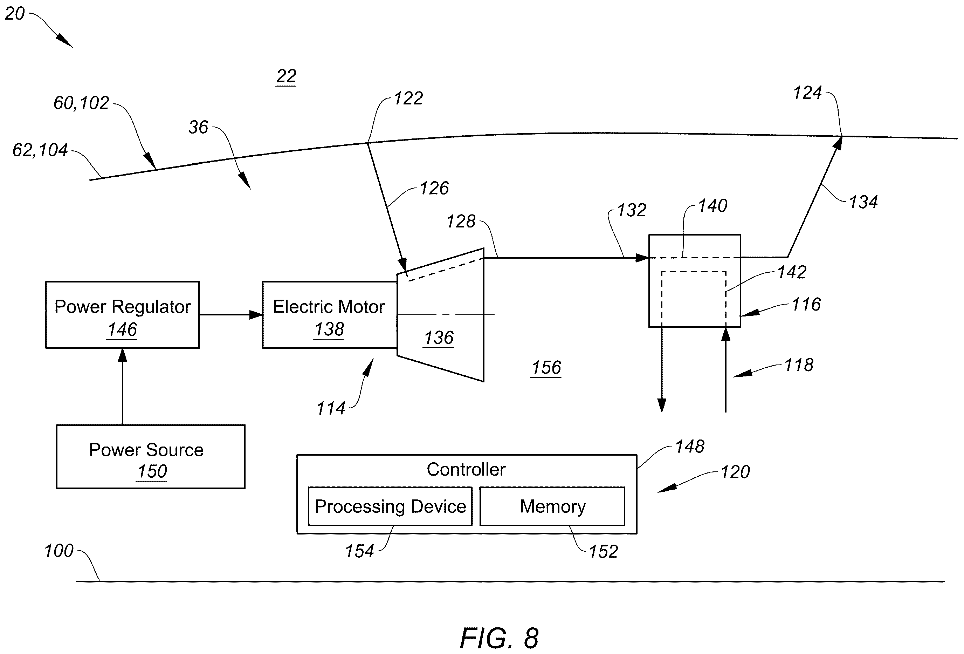

In some embodiments, referring to FIGS. 3 and 4, the system flowpath 110 may include the parallel compressor and bypass legs 128 and 130. In other embodiments, referring to FIG. 8, the bypass leg may be omitted such that the air always flows through the boost compressor 114. With such an arrangement, the boost compressor 114 may simply be non-operational during the free-flow mode.

Referring to FIG. 1, the propulsion section 30 is described above with its single propulsor rotor 38 and its guide vane structure 40 for ease of description. However, it is contemplated the aircraft propulsion system 20 may alternatively be configured without a guide vane structure and/or configured with multiple of the propulsor rotors; e.g., counter-rotating open propulsor rotors. The present disclosure therefore is not limited to any particular type or configuration of open aircraft propulsion system.

The guide vane structure 40 is described above as a fixed (e.g., non-rotatable) guide vane structure. It is contemplated, however, the guide vane structure 40 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 38 and the structure 40 are counter-rotating about the propulsion system axis 24); and (B) a single open rotor and swirl recovery vane (SRV) propulsion system during a single rotor mode of operation (e.g., when the propulsor rotor 38 is rotating and the structure 40 is rotationally fixed about the propulsion system axis 24). Note, when the guide vane structure 40 is configured to selectively rotate about the propulsion system axis 24, the moving guide vanes 56 operate as propulsor blades.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system (20) for an aircraft, comprising:
an open propulsor rotor (38);
a turbine engine (32) configured to drive rotation of the open propulsor rotor (38) about an axis (24), the turbine engine (32) including an engine core (82) and an engine flowpath (76), the engine core (82) including a compressor section (71), a combustor section (72) and a turbine section (73), and the engine flowpath (76) extending longitudinally though the compressor section (71), the combustor section (72) and the turbine section (73) from an airflow inlet (78) into the engine flowpath (76) to a combustion products exhaust (80) from the engine flowpath (76); and
a thermal management system (36) configured to manage heat energy generated by the propulsion system (20) during operation of the turbine engine (32), the thermal management system (36) including an electric boost compressor (114), a heat exchanger (116) and a system flowpath (110) disposed outside of the engine core (82), and the system flowpath (110) extending longitudinally through the electric boost compressor (114) and the heat exchanger (116) from an airflow inlet (122) into the system flowpath (110) to an airflow exhaust (124) from the system flowpath (110).

2. The propulsion system (20) of claim 1, wherein the system flowpath (110) is fluidly decoupled from the engine flowpath (76).

3. The propulsion system (20) of claim 1 or 2, wherein the airflow inlet (122) into the system flowpath (110) is fluidly coupled to the engine flowpath (76) upstream of the compressor section (71),
optionally, wherein the compressor section (71) includes a low pressure compressor section (71A) and a high pressure compressor section (71B).

4. The propulsion system (20) of any preceding claim, further comprising a housing structure (60) housing the turbine engine (32) and the thermal management system (36), the housing structure (60) comprising an exterior surface (62) bordering an environment external (22) to the propulsion system (20), and the airflow inlet (122) into the system flowpath (110) disposed in the exterior surface (62).

5. The propulsion system (20) of claim 4, further comprising a plurality of open guide vanes (40) arranged circumferentially about the axis (24), a first of the plurality of open guide vanes (40) projecting radially out from the housing structure (60) into the environment external (22) to the propulsion system (20), and the airflow inlet (122) into the system flowpath (110) disposed axially between the first of the plurality of open guide vanes (40) and the airflow exhaust (124) from the system flowpath (110).

6. The propulsion system (20) of claim 4 or 5, wherein the airflow exhaust (124) from the system flowpath (110) is disposed in the exterior surface (62).

7. The propulsion system (20) of any preceding claim, further comprising a control system (120) configured to:
power the electric boost compressor (114) when an operational parameter is above a threshold; and
depower the electric boost compressor (114) when the operational parameter is below the threshold and the turbine engine (32) is operational.

8. The propulsion system (20) of claim 7, wherein the operational parameter is:
a temperature of a working fluid within the propulsion system (20); and/or
a temperature of ambient air in an environment external (22) to the propulsion system (20); and/or
the operational parameter is a throttle setting for the propulsion system (20).

9. The propulsion system (20) of any preceding claim, wherein:
the system flowpath (110) includes a plurality of parallel legs upstream of the heat exchanger (116);
a first of the plurality of parallel legs extends longitudinally through the electric boost compressor (114); and
a second of the plurality of parallel legs bypasses the electric boost compressor (114).

10. The propulsion system (20) of claim 9, wherein the system flowpath (110) further includes an inlet leg (126) extending longitudinally from the airflow inlet (122) into the system flowpath (110) towards the plurality of parallel legs; and the thermal management system (36) further includes a flow diverter (112) configured to:
fluidly couple the inlet leg (126) to the first of the plurality of parallel legs during a first mode; and
fluidly couple the inlet leg (126) to the second of the plurality of parallel legs during a second mode.

11. The propulsion system (20) of claim 10, wherein the flow diverter (112) is further configured to fluidly decouple the inlet leg (126) from:
the second of the plurality of parallel legs during the first mode; or
the first of the plurality of parallel legs during the second mode.

12. The propulsion system (20) of any preceding claim, further comprising a working fluid circuit (118) extending through the heat exchanger (116) and:
thermally coupled to a heat source within the turbine engine (32); and/or
the working fluid circuit (118) configured to flow a liquid working fluid.

13. The propulsion system (20) of any preceding claim, wherein the heat exchanger (116) is a first heat exchanger, and the thermal management system (36) further includes a second heat exchanger and a working fluid circuit (118) extending through the first heat exchanger and the second heat exchanger.

14. A propulsion system for an aircraft, comprising:
a housing structure comprising an exterior surface bordering an environment external to the propulsion system;
an open propulsor rotor outside of the housing structure;
a turbine engine housed within the housing structure, the turbine engine configured to drive rotation of the open propulsor rotor about an axis, the turbine engine including an engine flowpath, a compressor section, a combustor section and a turbine section, and the engine flowpath extending longitudinally though the compressor section, the combustor section and the turbine section from an airflow inlet into the engine flowpath to a combustion products exhaust from the engine flowpath; and
a thermal management system housed within the housing structure, the thermal management system configured to remove heat energy generated during propulsion system operation, the thermal management system including a system flowpath, a boost compressor and a heat exchanger, the system flowpath extending longitudinally through the boost compressor and the heat exchanger from an airflow inlet into the system flowpath to an airflow exhaust from the system flowpath, and the airflow inlet into the system flowpath located at the exterior surface and fluidly coupling the environment external to the propulsion system to the system flowpath.

15. A propulsion system for an aircraft, comprising:
a housing structure comprising an exterior surface bordering an environment external to the propulsion system;
an open propulsor rotor outside of the housing structure;
a turbine engine housed within the housing structure, the turbine engine configured to drive rotation of the open propulsor rotor about an axis, the turbine engine including an engine flowpath, a compressor section, a combustor section and a turbine section, and the engine flowpath extending longitudinally though the compressor section, the combustor section and the turbine section from an airflow inlet into the engine flowpath to a combustion products exhaust from the engine flowpath; and
a thermal management system housed within the housing structure, the thermal management system configured to remove heat energy generated during propulsion system operation, the thermal management system including a system flowpath, a boost compressor and a heat exchanger, the system flowpath extending longitudinally through the boost compressor and the heat exchanger from an airflow inlet into the system flowpath to an airflow exhaust from the system flowpath, and the system flowpath fluidly decoupled from the engine flowpath.
